(19)

Europäisches
Patentamt
European
Patent Office
Office européen
des brevets

(11) **EP 4 249 993 A1**

(12) **EUROPEAN PATENT APPLICATION**
published in accordance with Art. 153(4) EPC

(43) Date of publication:
**27.09.2023 Bulletin 2023/39**

(21) Application number: **22823833.3**

(22) Date of filing: **18.03.2022**

(51) International Patent Classification (IPC):
**G02C 7/02** (2006.01)    **G02C 7/06** (2006.01)
**G02C 7/04** (2006.01)

(86) International application number:
**PCT/CN2022/081604**

(87) International publication number:
**WO 2022/262342 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021  CN 202110675640**

(71) Applicant: **Gino Optical (Shanghai) Co., Ltd.
Shanghai 201318 (CN)**

(72) Inventors:
• **LI, Yiyu
  Wenzhou City, Zhejiang 325000 (CN)**
• **XIA, Risheng
  Wenzhou City, Zhejiang 325000 (CN)**
• **CHEN, Hao
  Wenzhou City, Zhejiang 325000 (CN)**
• **QU, Jia
  Wenzhou City, Zhejiang 325000 (CN)**

(74) Representative: **Bayramoglu et al.
Mira Office
Kanuni Sultan Süleyman Boulevard 5387
Street Beytepe, floor 12, no:50
06800 Cankaya, Ankara (TR)**

(54) **ZONED FREEFORM SURFACE ASTIGMATISM-ELIMINATING PROGRESSIVE ADDITION LENS AND DESIGN METHOD**

(57)    An astigmatism-free progressive addition lens with a zoned free-form surface and a design method therefor are mainly intended to address the problem that traditional free-form surface designs fail to eliminate astigmatism and only allow for limited compression of the astigmatism in an aberration zone. The present invention provides an astigmatism-free progressive addition lens with a zoned free-form surface and a design method therefor. Unlike the prior art, for the zoned free-form surface provided in the present invention, independent quadratic optimization is performed on a surface form in each of sub-zones so that the astigmatism can be suppressed and even completely eliminated to a certain extent, and the zoned free-form surface formed by splicing and combining the sub-zones has a similar spherical refractive power and added magnifying power distribution to a traditional free-form surface. Under an anastigmatic action, an entire lens caliber of the progressive addition lens with the zoned free-form surface pertains to usable optical zones, and other zones than a traditional far sighting zone and a near sighting zone may be used as a medium-distance transition zone. Therefore, when such a lens is used, the clear dynamic field range of human eyes is no longer limited by the aberration zone of the lens.

**FIG. 1**

**Description**

**TECHNICAL FIELD**

The present invention relates to an optical lens and a design method therefor, and in particular, to an astigmatism-free progressive addition lens with a zoned free-form surface and a design method therefor.

**BACKGROUND ART**

Progressive addition lens (PAL), which is an ophthalmic medical multi-focal optical lens, is mainly used for improving a presbyopic patient's eyesight and visual function. Usable optical zones of a PAL include a far sighting zone providing distance vision correction, a near sighting zone providing near vision correction, and a progressive passage zone providing a medium-distance visual range. Aberration zones are distributed on two sides of the usable optical zones. The functional surface form of the PAL is a continuous and smooth free-form surface. In the aberration zones of the PAL, surface irregular astigmatism (astigmatism for short) accounts for the highest proportion, which is an inevitable result due to a surface curvature of the lens continuously changing from the far sighting zone to the near sighting zone. Within the dynamic field range of human eyes, the astigmatism of the lens leads to serious blurry imaging in part of the field of view, blurred vision of human eyes and the like, and even causes a lens fitting failure. Therefore, optimized distribution and control of astigmatism has become an important problem needing to be solved in the design of a free-form PAL and is also a challenge.

A front surface or a rear surface of the PAL can be designed as a free-form surface, and even both of the front surface and the rear surface can be designed as free-form surfaces. Surface form design methods may be classified into a direct analytical design method and an indirect numerical optimization method. Astigmatism cannot be eliminated in traditional free-form surface designs. Therefore, a design objective is to obtain a desired spherical refractive power distribution in usable optical zones, and maximally compress the astigmatism in the aberration zones such that an amplitude of the astigmatism does not exceed the added magnifying power of the lens, as described in Chinese patent No. CN 102902078 B which discloses a free-form progressive multi-focal lens and a design method thereof.

**SUMMARY**

To overcome the shortcomings of the prior art, the present invention provides an astigmatism-free progressive addition lens with a zoned free-form surface and a design method therefor, which are mainly intended to address the problem that traditional free-form surface designs fail to eliminate astigmatism and only allow for limited compression of the astigmatism in an aberration zone.

The present invention adopts the technical solutions as follows.

An astigmatism-free design method for a zoned free-form surface includes the following steps:

S 1, calculating principal curvatures of an initial free-form surface, acquiring a spherical refractive power distribution and an astigmatism distribution, and dividing a continuous and smooth initial free-form surface into sub-zone surface forms with an axial direction change trajectory of astigmatism as a reference center line for sub-zone dividing, wherein the sub-zone dividing at least covers an aberration distribution zone of the free-form surface;

S2, performing quadratic optimization on the sub-zone surface forms according to a difference between the principal curvatures of the initial free-form surface; during optimization, keeping a surface form vector height and a normal direction in the axial direction change trajectory of astigmatism unchanged, and optimizing a cross section curvature and a cross section curve in a direction orthogonal to the axial direction change trajectory of astigmatism, thereby reducing the difference between the principal curvatures; and

S3, splicing and combining the optimized sub-zone surface forms according to a spatial location distribution of an initial axial direction change trajectory of astigmatism, and using interpolation transition at a splice to eliminate a local tiny jump of the surface forms, thereby obtaining a continuous and smooth zoned free-form surface.

The spherical refractive power distribution in S 1 refers to a surface refractive power corresponding to a principal curvature of the surface, with a formula shown below:

$$P_i(x,y) = (n\text{-}1)\kappa_i(x,y), i = 1, 2,$$

wherein n represents a refractive index of a lens.

The astigmatism distribution Astig(x,y) in S 1 refers to a difference between a maximum refractive power and a minimum refractive power of the surface, with a formula shown below:

$$\text{Astig}(x,y) = |P_1(x,y)\text{-}P_2(x,y)|.$$

In S2, the cross section curvature and the cross section curve are optimized in the direction orthogonal to the axial direction change trajectory of astigmatism.

When a circular curve is selected and the minimum curvature is chosen for optimizing the cross section curvature, given curvature center coordinates $C_T$ ($x_T,y_T,z_T$), a vector height difference exists between the optimized cross section curve and the cross section curve before optimization:

$$\Delta z\left(x_i, y_i\right) = \left[\sqrt{\frac{1}{\kappa_1^2}-\left(x_i - x_{\mathrm{T}}\right)^2-\left(y_i - y_{\mathrm{T}}\right)^2}+z_{\mathrm{T}}\right]-\sqrt{\frac{1}{\kappa_2^2}-x_i^2-y_i^2},$$

wherein $\Delta_z(x_i,y_i)$ represents a vector height change in a coordinate point (xi,yi) before and after the optimization of the cross section curve.

An astigmatism-free progressive addition lens with a zoned free-form surface includes a lens, wherein the lens is designed by the astigmatism-free design method for a zoned free-form surface described above.

The dividing and the optimization of the sub-zone surface forms act on a front surface and/or a rear surface of the lens.

An axial direction change trajectory of astigmatism is capable of covering an entire free-form surface of the lens or covering aberration distribution zones on two sides of a progressive passage of the lens.

The present invention has the following beneficial effects: the present invention provides an astigmatism-free progressive addition lens with a zoned free-form surface and a design method therefor. Unlike the prior art, for the zoned free-form surface provided in the present invention, independent quadratic optimization is performed on a surface form in each of sub-zones so that the astigmatism can be completely eliminated to a certain extent, and the zoned free-form surface formed by splicing and combining the sub-zones has a similar spherical refractive power and added magnifying power distribution to an initial free-form surface. An entire lens caliber of the progressive addition lens with the zoned free-form surface pertains to usable optical zones, and other zones than a traditional far sighting zone and a near sighting zone may be used as a medium-distance transition zone. Therefore, when such a lens is used, the clear dynamic field range of human eyes is no longer limited by the aberration zone of the lens.

## BRIEF DESCRIPTION OF THE DRAWINGS

FIG. 1 illustrates a designed maximum spherical refractive power distribution of an initial free-form surface of a progressive addition lens according to Example 1 of the present invention.

FIG. 2 illustrates a designed astigmatism distribution of an initial free-form surface of a progressive addition lens according to Example 1 of the present invention.

FIG. 3 illustrates a designed surface form vector height distribution and an axial direction change trajectory of astigmatism of an initial free-form surface of a progressive addition lens according to Example 1 of the present invention.

FIG. 4 illustrates a designed surface form of an astigmatism-free progressive addition lens with a zoned free-form surface according to Example 1 of the present invention, showing a difference distribution of surface form vector heights as compared with an initial free-form surface before interpolation smoothing.

FIG. 5 illustrates a designed surface form of an astigmatism-free progressive addition lens with a zoned free-form surface according to Example 1 of the present invention, showing a difference distribution of surface form vector heights as compared with an initial free-form surface after interpolation smoothing.

FIG. 6 illustrates a designed maximum spherical refractive power distribution of a rear surface of an astigmatism-free progressive addition lens with a zoned free-form surface according to Example 1 of the present invention.

FIG. 7 illustrates a designed minimum spherical refractive power distribution of a rear surface of an astigmatism-free progressive addition lens with a zoned free-form surface according to Example 1 of the present invention.

FIG. 8 illustrates a designed astigmatism distribution of a rear surface of an astigmatism-free progressive addition lens with a zoned free-form surface according to Example 1 of the present invention.

**DETAILED DESCRIPTION**

The present invention is further described below with reference to the accompanying drawings. An astigmatism-free design method for a zoned free-form surface includes the following steps.

The present invention provides an astigmatism-free progressive addition lens with a zoned free-form surface and a design method therefor, and the following steps are included.

(1) Principal curvatures (i.e., a maximum curvature and a minimum curvature) of an initially designed free-form surface are obtained by fitting, and a spherical refractive power distribution, and an astigmatic aberration and an axial distribution thereof are acquired, from which an axial direction change trajectory of astigmatism is extracted.

The initially designed free-form surface of the progressive addition lens is a non-rotationally symmetric complex surface, and surface form fitting and description may be carried out by using a Zernike polynomial.

The minimum curvature $\kappa_1$ and the maximum curvature $\kappa_2$ of the principal curvatures of the surface are respectively obtained by the following calculation formulas:

$$\kappa_1 = H - \sqrt{H^2 - K} \,, \quad \kappa_2 = H + \sqrt{H^2 - K}$$

wherein H represents an average curvature of the surface and K represents a Gaussian curvature of the surface, which are respectively obtained by the following algorithm formulas:

$$H = \frac{EN + GL - 2FM}{2\left(EG - F^2\right)} \,, \quad K = \frac{LN - M^2}{EG - F^2}$$

wherein E, F and G represent surface coefficients in a first fundamental form and L, M and N represent surface coefficients in a second fundamental form, and all of the surface coefficients are respectively obtained by the following algorithm formulas:

$$E = 1 + Z_x^2 \,, \quad F = ZxZy, \quad G = 1 + Z_y^2$$

$$L = \frac{Z_{xx}}{\sqrt{1 + Z_x^2 + Z_y^2}} \,, \quad M = \frac{Z_{xy}}{\sqrt{1 + Z_x^2 + Z_y^2}} \,, \quad N = \frac{Z_{yy}}{\sqrt{1 + Z_x^2 + Z_y^2}}$$

wherein $Z_x$ and $Z_y$ represent first-order partial derivatives, and $Z_{xx}$, $Z_{xy}$ and $Z_{yy}$ represent second-order partial derivatives.

A direction of a principal curvature of the surface refers to an azimuth of a normal plane in which the principal curvature lies, with a formula shown below:

$$\alpha_i = \arctan\left(-\frac{M - \kappa_i F}{N - \kappa_i G}\right), \quad i = 1, 2$$

wherein $\alpha_1$ and $\alpha_2$ represent the azimuths of the minimum curvature and the maximum curvature, respectively.

A maximum refractive power $P_2$ and a minimum refractive power $P_1$ are obtained by the following formula:

$$P_i(x,y) = (n-1)\kappa_i(x,y), \quad i = 1, 2$$

wherein n represents a refractive index of a lens.

The spherical refractive power distribution refers to the maximum refractive power of the surface.

The astigmatism distribution Astig(x,y) of the surface refers to a difference between the maximum refractive power and the minimum refractive power of the surface:

$$\text{Astig(x,y)} = |P_1(x,y) - P_2(x,y)|$$

An axial direction of astigmatism refers to the azimuth $\alpha 1$ of the normal plane where the minimum curvature lies and changes continuously with the astigmatism distribution on the surface.

The axial direction change trajectory of astigmatism is capable of covering the entire free-form surface of the lens, and generally needs to cover only a zone in which the astigmatism distribution is concentrated, e.g., aberration zones on two sides of a progressive passage. A point in an edge of the surface caliber may be selected as a starting point of an axial direction change trajectory of astigmatism. If a plurality of different starting points are selected, a plurality of different axial direction change trajectories of astigmatism will be obtained accordingly, and the trajectories will not intersect. A distance between adjacent trajectories is substantially determined by a transverse spacing between the starting points.

(2) Dividing of sub-zone surface forms is performed.

The dividing of sub-zone surface forms is performed with axial direction change trajectories of astigmatism as center lines of respective sub-zone ranges. In a direction perpendicular to the center line, a width of the sub-zone may be constant or may vary. A center distance between adjacent sub-zones may be constant or may vary. Therefore, zoning may be performed across the entire free-form surface, or may be performed in relation to partial zones of the free-form surface. For example, zoning may be performed only on the aberration zones on the two sides of the progressive passage of the progressive addition lens with the zoned free-form surface.

(3) Optimization is performed on the sub-zone surface forms.

In a sub-zone, quadratic optimization of the surface for the astigmatism-free purpose is realized by reconstructing the principal curvature and a corresponding cross section curve thereof.

The optimization of the sub-zone surface form includes keeping a surface vector height and a normal direction of the surface in the center line of the sub-zone unchanged, and optimizing a cross section curvature in a direction orthogonal to the center line such that a new cross section curvature is closer or equal to the minimum curvature in the axial direction of astigmatism.

The cross section curve corresponding to the cross section curvature in the direction orthogonal to the center line may be part of a quadratic curve such as a circle, an ellipse, a parabola and a hyperbola. Assuming that a circular curve is selected and the minimum curvature is chosen for optimizing the cross section curvature, given curvature center coordinates $C_T$ $(x_T, y_T, z_T)$, a vector height difference exists between the optimized cross section curve and the cross section curve before optimization:

$$\Delta z(x_i, y_i) = \left[ \sqrt{\frac{1}{\kappa_1^2} - (x_i - x_T)^2 - (y_i - y_T)^2} + z_T \right] - \sqrt{\frac{1}{\kappa_2^2} - x_i^2 - y_i^2}$$

wherein $\Delta z(x_i, y_i)$ represents a vector height change in a coordinate point $(x_i, y_i)$ before and after the optimization of the cross section curve.

The optimization of the cross section curvature is performed point by point along the axial direction change trajectory of astigmatism within the sub-zone. Within the sub-zones, a set of new cross section curves constitutes a result of the quadratic optimization of the sub-zone surface forms.

(4) The sub-zone surface forms are combined and spliced.

The combining and splicing of the sub-zone surface forms refer to combining the optimized sub-zone surfaces in situ according to the coordinates of the center line of the sub-zone (i.e., the coordinates of the initial axial direction change trajectory of astigmatism) and using interpolation to realize smooth transition for a surface form jump between the adjacent sub-zones. The combined and spliced curve also is a continuous and smooth free-form surface. Compared with the initial free-form surface before the optimization, the spliced zoned free-form surface contains richer higher-order variable components.

Astigmatism elimination for the zoned free-form surface refers to performing quadratic optimization on the sub-zone surface forms to reduce or eliminate the local astigmatism in the sub-zones, and combining and splicing the sub-zone surface forms to extend the astigmatism elimination to the entire caliber. Since the quadratic optimization of the sub-zone surface forms does not change the distribution of the minimum principal curvature, it does not affect an incremental change trend of the spherical refractive power from the far sighting zone to the near sighting zone and can well guaranteeing the added magnifying power property of the progressive addition lens. Therefore, an astigmatism-free progressive addition lens with a zoned free-form surface may provide usable optical zones of the entire caliber, and other zones than a traditional far sighting zone and a near sighting zone may be used as a medium-distance transition zone.

Therefore, the design method is suitable for free-form lens of different visual function assisting types.

An astigmatism-free progressive addition lens with a zoned free-form surface includes a lens, wherein the lens is designed by the astigmatism-free design method for a zoned free-form surface described above.

The dividing and the optimization of the sub-zone surface forms act on a front surface and/or a rear surface of the lens.

An axial direction change trajectory of astigmatism is capable of covering an entire free-form surface of the lens or covering aberration distribution zones on two sides of a progressive passage of the lens.

Example 1

A concave surface of an astigmatism-free progressive addition lens with a zoned free-form surface described in this example, i.e., a rear surface of the lens, is a free-form surface, and an external surface thereof may be a spherical surface, an aspheric surface or a loop surface. A working caliber of the lens is 60 mm. A refractive index of a material is 1.60, and a center thickness is 3.5 mm. A front curvature of the front surface of the lens is 4.0 D; a distance visual prescription degree is -1.50 D; and the added magnifying power is 2.00 D. A near visual reference point is located 11 mm below the geometric center of the lens; meanwhile, a near sighting point is moved inwardly by 2 mm. The traditional free-form surface design is firstly applied to a rear surface of the lens, followed by the astigmatism-free design for the zoned free-form surface on this basis.

This example will be further described with reference to the accompanying drawings.

As can be seen from the above front curvature and the prescription degree of the lens, the refractive powers of a far sighting zone and a near sighting zone of the rear surface of the lens are -5.50 D and -3.50 D, respectively, and curvature radii of corresponding far sighting point and a near sighting point are 109.1 mm and 171.4 mm, respectively. Design objectives of the curvature radii and spherical refractive powers for other positions on the rear surface are set by distance proportions thereof to the far sighting point and the near sighting point, respectively. The surface form of the initial free-form surface of the rear surface of the lens is designed by using a variational-differential numerical optimization method. The optical properties of the lens are mainly characterized by the spherical surface refractive power and the surface astigmatism.

The above-mentioned variational-differential numerical optimization method may be specifically divided into four steps: establishment of an objective function, establishment of a weight function, establishment of an evaluation function, and numerical calculation and optimization.

The objective function refers to a design objective spherical power distribution and a design objective astigmatism distribution of the progressive addition lens. Target values in an astigmatism design distribution function are all zero; a spherical power design distribution function requires that the spherical refractive power increases gradually from the far sighting zone to the near sighting zone, and a changing trend follows a Gaussian integral form.

The weight function refers to respective two-dimensional positive weight factor distributions of the spherical power and the astigmatism. The usable optical zones of the progressive addition lens require the accurate spherical power and the lowest astigmatism. Therefore, these zones are correspondingly allocated with high weight factors. The aberration zones of the progressive addition lens have a large tolerance to the spherical power and are correspondingly allocated with low weight factors.

The evaluation function refers to a mathematical model for evaluating an actual design deviation of the spherical power and residual astigmatism, which is expressed as follows:

$$\mathrm{DOF} = \int_\Omega F(x,y)\{\alpha(x,y)|\kappa_1(x,y)-\kappa_2(x,y)|+\beta(x,y)[H(x,y)-H_r(x,y)]^2\}dxdy,$$

wherein $\alpha(x,y)$ and $\beta(x,y)$ represent weight functions of the astigmatism and the spherical power, respectively; $\kappa_1(x,y)-\kappa_2(x,y)$ represent the residual astigmatism; and $H(x,y)$ and $H_r(x,y)$ represent an actual design value and a target set value of the spherical power (surface curvature), respectively.

Since the evaluation function cannot be directly minimized for its higher-order nonlinearity property, the evaluation function needs to be converted into the minimization problem of a linear function by using a variational mathematical method, and then a numerical solution is obtained by using a finite difference method. Specific steps are as follows.

1. An initial free-form surface Z(x,y) to be designed is split into a basic spherical surface portion $\omega(x,y)$ and a deformed portion $\upsilon(x,y)$.

2. The evaluation function DOF is transformed into a quadratic expression including first-order and second-order partial derivatives of the basic spherical surface $\omega(x,y)$ and the deformed portion $\upsilon(x,y)$:

$$\mathrm{DOF} = \int_{\Omega} F(x,y) \left[ (\alpha+\beta)\hat{H}^2 - 2\beta H_r \hat{H} - \alpha\hat{K} + \beta H_r^2 \right] g\, dx\, dy$$

wherein

$$\hat{H} = H(\omega) + \frac{\left(1+\omega_x^2\right)\upsilon_{yy} - 2\omega_x\omega_y\upsilon_{xy} + \left(1+\omega_y^2\right)\upsilon_{xx}}{2g^3},$$

$$\hat{K} = \frac{\left(\omega_{xx}+\upsilon_{xx}\right)\left(\omega_{yy}+\upsilon_{yy}\right) - \left(\omega_{xy}+\upsilon_{xy}\right)^2}{g^4}, \qquad g = \sqrt{1+\omega_x^2+\omega_y^2}$$

3. A curvature radius is selected for the basic spherical surface $\omega(x,y)$, and the first-order partial derivatives $\omega_x$ and $\omega_y$ and the second-order partial derivatives $\omega_{xx}$, $\omega_{yy}$ and $\omega_{xy}$ of the basic spherical surface are calculated.

4. A constraint condition for the deformed portion $\upsilon(x,y)$ is set at the boundary of design zones, and the minimization problem of the evaluation function DOF is transformed into the minimization problem of the linear function.

5. The finite difference method is introduced to discretize the expression of the first-order partial derivatives $\upsilon_x$ and $\upsilon_y$ and the second-order partial derivatives $\upsilon_{xx}$, $\upsilon_{yy}$ and $\upsilon_{xy}$ of $\upsilon(x,y)$ such that the minimization problem of the linear function is transformed into a finite difference minimization problem, and the $\upsilon(x,y)$ is solved by matrix operation.

6. The known basic spherical surface $\omega(x,y)$ is superimposed with the obtained deformed portion $\upsilon(x,y)$ to form the designed surface form Z(x,y) of the initial free-form surface.

High-accuracy surface form fitting is performed on the initial free-form surface by using a Zernike polynomial. The principal curvatures of the surface are calculated based on the differential geometry theory. The spherical surface refractive power and the astigmatism distribution are calculated according to the refractive index of the lens.

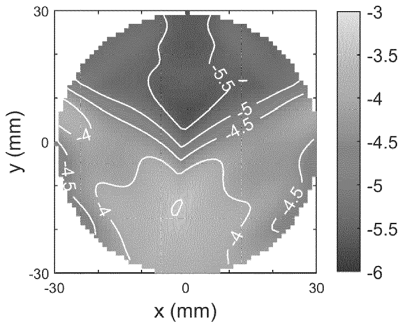

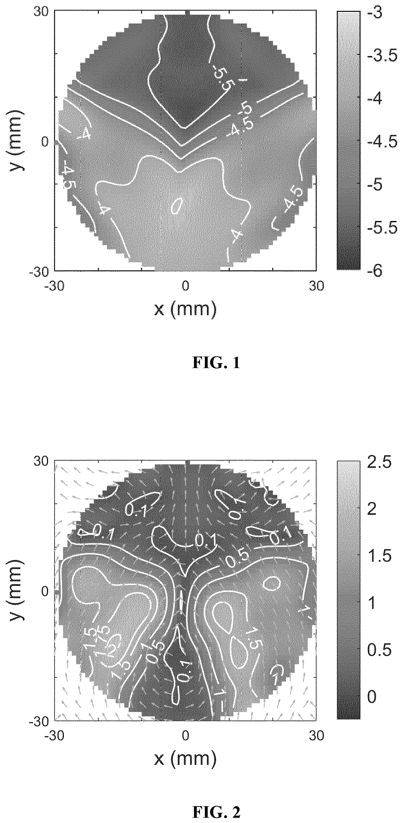

FIG. 1 illustrates the corresponding maximum spherical refractive power distribution for the initial free-form surface design of the progressive addition lens. The spherical refractive power distribution gradually increases from -5.50 D of the far sighting zone to -3.50 D of the near sighting zone, and the added magnifying power is 2.00 D.

FIG. 2 illustrates the corresponding astigmatism distribution for the initial free-form surface design of the progressive addition lens, wherein the arrow indicates the axial direction of the astigmatism, i.e., the orientation of the normal plane in which the minimum curvature lies. The astigmatism of less than 0.5 D may be used as the boundary for dividing the usable optical zones of the lens, including an upper large far sighting zone, a lower small near sighting zone and a middle narrow progressive passage zone. The two sides of the passage zone are unusable aberration zones because of concentrated astigmatism distribution and poor imaging quality.

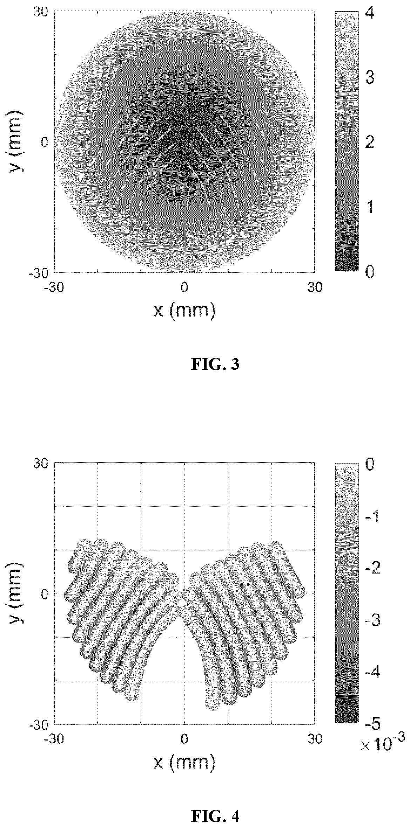

FIG. 3 illustrates a surface form vector height distribution for the initial free-form surface design of the progressive addition lens, with the surface form being non-rotationally symmetric, wherein curves represent the axial direction change trajectories of astigmatism. These trajectories cover only the aberration zones, and the starting points of the trajectories are set in a circle having a diameter of 50 mm (which can cover most spectacle-frame sizes; naturally, a larger diameter may also be similarly selected). A spacing between the trajectories is about 3.5 mm. The free-form surface is zoned with these trajectories as center lines.

FIG. 4 illustrates the change in the surface form vector height compared with the free-form surface before the optimization after the quadratic optimization of the sub-zone surface forms. Each sub-zone is strip-shaped with an uneven width. A spacing between adjacent sub-zones is also uneven. The optimization of the sub-zone surface form includes keeping the surface vector height and the normal direction of the surface in the center line of the sub-zone unchanged, and optimizing the cross section curvature in the direction orthogonal to the center line such that it is equal to the minimum curvature in the axial direction of astigmatism. Cross section curves corresponding to new cross section curvatures are all circular curves. Within the sub-zones, a set of new cross section curves constitutes a result after the quadratic optimization of the sub-zone surface forms. According to the coordinates of the center line of each sub-zone, the optimized sub-zone surface forms are combined and spliced to form a new complete surface form with a jump between adjacent sub-zone surface forms.

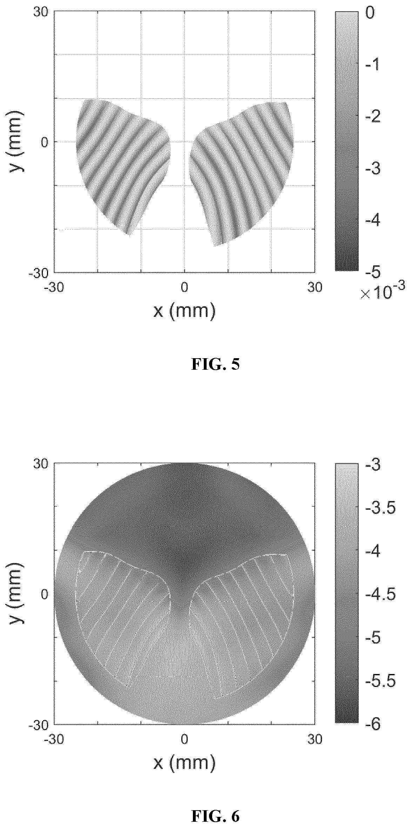

FIG. 5 illustrates the change in the surface form vector height of the zoned free-form surface after interpolation smoothing compared with the initial free-form surface before the optimization. Only zones in which the astigmatism is greater than 0.75 D before the optimization are maintained currently. Therefore, the astigmatism-free design of the zoned free-form surface substantially maintains the initial surface form within the original usable optical zone range, and more higher-order surface form components are increased in other zones.

FIG. 6 illustrates the maximum spherical refractive power distribution of the progressive addition lens with the zoned free-form surface, which gradually increases from -5.50 D of the far sighting zone to -3.50 D of the near sighting zone, with the added magnifying power of 2.00 D. Compared with FIG. 1, the dividing and the optimization of the visible sub-zone surface forms as well as subsequent splicing thereof have no influence on the expected maximum spherical refractive power distribution.

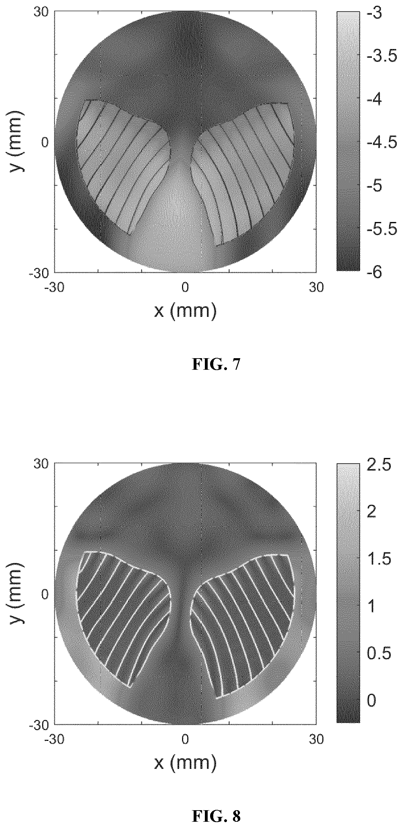

FIG. 7 illustrates the minimum spherical refractive power distribution of the rear surface of the astigmatism-free progressive addition lens with the zoned free-form surface. The minimum spherical refractive power is significantly increased in the divided sub-zones on the left and right sides and reaches a level matching the maximum spherical refractive power in FIG. 6.

FIG. 8 illustrates the astigmatism distribution of the rear surface of the astigmatism-free progressive addition lens with the zoned free-form surface. Within the divided sub-zones on the left and right sides, since the value and distribution of the maximum spherical refractive power are close to those of the minimum spherical refractive power, the astigmatism in these zones is suppressed. In other usable optical zones, since the surface form does not change, the distribution characteristic of low astigmatism is maintained. Therefore, the astigmatism-free progressive addition lens with the zoned free-form surface may provide usable optical zones of the entire caliber, and other zones than a traditional far sighting zone and a near sighting zone may be used as a medium-distance transition zone.

The present invention is not limited to the illustrated Example 1. The design method is not limited by the function type and the processing degree of a free-form lens. That is, the design method may also be applied to both of the front and rear surfaces of the lens apart from being applied solely to the front surface or the rear surface of the lens. Sub-zone dividing and astigmatism-free optimization are also not limited to partial zones of a free-form surface (e.g., the aberration zones in Example 1) and may be extended to the entire zone of the free-form surface. Moreover, a customized design may be carried out by taking personalized factors of a wearer such as a prescription degree, a spectacle-frame shape and a wearing habit into overall consideration. The astigmatism may be suppressed within the entire caliber range so that the lens can have an effective vision correction effect within the entire dynamic field range of human eyes. The fitting effect and the comfort of wearing can be greatly improved.

**Claims**

1. An astigmatism-free design method for a zoned free-form surface, comprising the following steps:

   S1, calculating principal curvatures of an initial free-form surface, acquiring a spherical refractive power distribution and an astigmatism distribution, and dividing a continuous and smooth initial free-form surface into sub-zone surface forms with an axial direction change trajectory of astigmatism as a reference center line for sub-zone dividing, wherein the sub-zone dividing at least covers an aberration distribution zone of the free-form surface;
   S2, performing quadratic optimization on the sub-zone surface forms according to a difference between the principal curvatures of the initial free-form surface, which specifically comprises: keeping a surface form vector height and a normal direction in the axial direction change trajectory of astigmatism unchanged, and optimizing a cross section curvature and a cross section curve in a direction orthogonal to the axial direction change trajectory of astigmatism such that a new cross section curvature is closer or equal to a minimum curvature in an axial direction of astigmatism, thereby reducing the difference between the principal curvatures; and
   S3, splicing and combining the optimized sub-zone surface forms according to a spatial location distribution of an initial axial direction change trajectory of astigmatism, and using interpolation transition at a splice to eliminate a local tiny jump of the surface forms, thereby obtaining a continuous and smooth zoned free-form surface.

2. The astigmatism-free design method for a zoned free-form surface according to claim 1, **characterized in that** the spherical refractive power distribution in S1 refers to a surface refractive power corresponding to a principal curvature of the surface, with a formula shown below:

$$P_i(x,y) = (n\text{-}1)\kappa_i(x,y), i = 1, 2,$$

wherein n represents a refractive index of a lens.

3. The astigmatism-free design method for a zoned free-form surface according to claim 1, **characterized in that** the astigmatism distribution Astig(x,y) in S1 refers to a difference between a maximum refractive power and a minimum refractive power of the surface, with a formula shown below:

$$Astig(x,y) = |P_1(x,y)\text{-}P_2(x,y)|.$$

4. The astigmatism-free design method for a zoned free-form surface according to claim 1, **characterized in that** in S2, the cross section curvature and the cross section curve are optimized in the direction orthogonal to the axial direction change trajectory of astigmatism; when a circular curve is selected and the minimum curvature is chosen for optimizing the cross section curvature, given curvature center coordinates $C_T(x_T,y_T,z_T)$, a vector height difference exists between the optimized cross section curve and the cross section curve before optimization:

$$\Delta z\left(x_i, y_i\right) = \left[\sqrt{\frac{1}{\kappa_1^2} - \left(x_i - x_T\right)^2 - \left(y_i - y_T\right)^2} + z_T\right] - \sqrt{\frac{1}{\kappa_2^2} - x_i^2 - y_i^2},$$

wherein $\Delta z(x_i,y_i)$ represents a vector height change in a coordinate point (xi,yi) before and after the optimization of the cross section curve.

5. An astigmatism-free progressive addition lens with a zoned free-form surface, comprising a lens, **characterized in that** the lens is designed by the astigmatism-free design method for a zoned free-form surface according to any one of claims 1-5.

6. The astigmatism-free design method for a zoned free-form surface according to claim 5, **characterized in that** the dividing and optimization of the sub-zone surface forms act on a front surface and/or a rear surface of the lens.

7. The astigmatism-free design method for a zoned free-form surface according to claim 6, **characterized in that** an axial direction change trajectory of astigmatism is capable of covering an entire free-form surface of the lens or covering aberration distribution zones on two sides of a progressive passage of the lens.

**FIG. 1**

**FIG. 2**

**FIG. 3**

**FIG. 4**

**FIG. 5**

**FIG. 6**

**FIG. 7**

**FIG. 8**

## INTERNATIONAL SEARCH REPORT

| International application No. |
| --- |
| **PCT/CN2022/081604** |

| A. | CLASSIFICATION OF SUBJECT MATTER |
| --- | --- |

G02C 7/02(2006.01)i; G02C 7/06(2006.01)i; G02C 7/04(2006.01)i

According to International Patent Classification (IPC) or to both national classification and IPC

| B. | FIELDS SEARCHED |
| --- | --- |

Minimum documentation searched (classification system followed by classification symbols)

G02C

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 截面曲线, 截面曲率, 像散, 象散, 矢高, 渐变镜, 自由曲面, 轴向, section, curve, astigmati+, axial, free, progressive, mirror

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113341590 A (WENZHOU MEDICAL UNIVERSITY) 03 September 2021 (2021-09-03) description, paragraphs [0005]-[0097], and figures 1-8 | 1-7 |
| A | CN 102043258 A (SUZHOU UNIVERSITY OF SCIENCE AND TECHNOLOGY) 04 May 2011 (2011-05-04) description, paragraphs [0004]-[0078], and figures 1-11 | 1-7 |
| A | US 5708492 A (HOYA CORP. et al.) 13 January 1998 (1998-01-13) entire document | 1-7 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 May 2022** | **26 May 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/081604**

| Patent document cited in search report | | | Publication date (day/month/year) | Patent family member(s) | | | Publication date (day/month/year) |
|---|---|---|---|---|---|---|---|
| CN | 113341590 | A | 03 September 2021 | None | | | |
| CN | 102043258 | A | 04 May 2011 | CN | 102043258 | B | 26 September 2012 |
| US | 5708492 | A | 13 January 1998 | JP | H0990291 | A | 04 April 1997 |
| | | | | WO | 9711401 | A1 | 27 March 1997 |
| | | | | KR | 19990063644 | A | 26 July 1999 |
| | | | | CN | 1200814 | A | 02 December 1998 |
| | | | | EP | 0872755 | A1 | 21 October 1998 |
| | | | | AU | 7000596 | A | 09 April 1997 |
| | | | | AU | 723308 | B2 | 24 August 2000 |
| | | | | CN | 1103934 | C | 26 March 2003 |
| | | | | KR | 393901 | B1 | 01 November 2003 |
| | | | | CA | 2232539 | C | 07 February 2006 |

Form PCT/ISA/210 (patent family annex) (January 2015)

**REFERENCES CITED IN THE DESCRIPTION**

**Patent documents cited in the description**

- CN 102902078 B